# EUROPEAN PATENT APPLICATION

(11) **EP 4 438 907 A1**
(43) Date of publication of application: **02.10.2024**
(21) Application number: 23165629.9
(22) Date of filing: 30.03.2023
(51) Int. Cl.: F04D 29/70, B01D 19/00

(54) **HIGH FLOW DEAREATION VESSEL**

(71) Applicant: Hitachi Energy Ltd, 8050 Zürich (CH)
(72) Inventor: STROMBERG, Andreas Karl Emil, 24791 S Sandby (SE)
(74) Representative: Michalski Hüttermann & Partner Patentanwälte mbB

(57) **Abstract**

The invention relates to a cooling system (1) for a power transmission application comprising at least one pump (2) configured for conveying a fluid for cooling the power transmission application and comprising a suction side (6), a vessel (7) defining a longitudinal axis (8) and comprising an inlet (9) and an outlet (10) feeding the suction side (6), and a piping (5) feeding both the inlet (9) and the suction side (6) of the at least one pump (2), whereby the vessel (7) comprises a T-shaped pipe (11) arranged within the vessel (7), the T-shaped pipe (11) is fed by the inlet (9), whereby opposite pipe ends extend along the longitudinal axis (8) and are closed with holed ends (12) for spreading fluid into the vessel (7).

## Description

### Technical Field

The invention relates to a cooling system for a power transmission application comprising at least one pump for conveying a fluid and comprising a suction side.

### Background Art

Power transmission is generally understood as a movement of energy from its place of generation to a location where it is applied to perform useful work. In this respect power transmission applications comprise, among others, high-voltage direct-current, HVDC, or static var compensator, SVC, applications. Most HVDC links use voltages between 100 kV and 800 kV, and nowadays even 1,100 kV or more. Such power transmission applications and in particular HVDC circuit breakers often require a cooling system by means of pumping a cooling fluid, such as water.

One problem with such cooling systems are gas bubbles contained in the fluid, which negatively affect pumping efficiency. Thus, deareation vessels are used for slowing down velocity of the fluid into a velocity below a rising speed of gas bubbles. Such wise the gas bubbles can rise to a top of the vessel, where an automatic deareation valve is arranged for letting the gas bubbles escape out of the vessel.

As cooling systems become larger, a size respectively diameter of the vessels increases, which takes space and cost. As internals of the vessel are exposed to pressure, thickness of the vessel becomes impractical. Further, a larger cooling system requires a larger inlet run, such that the fluid comes in the right way. Thus, for larger cooling systems an optimal inlet run is impossible. As a consequence, in prior art, flow to the deareation vessel is simply taken as a smaller portion of the full flow and flow through the vessel is regulated by throttling the main flow by means of an orifice.

Downside of such solution is that the free gas bubbles pass the inlet if the flow to the vessel is too low, thus even if an efficiency of the vessel is high i.e. low velocity, a total efficiency is low due to the fact that no gas comes in the fluid entering the vessel.

### Summary of invention

It is therefore an object of the invention to provide an improved cooling system for power transmission applications.

The object of the invention is solved by the features of the independent claim. Preferred implementations are detailed in the dependent claims.

Thus, the object is solved by a cooling system for power transmission applications comprising
at least one pump configured for conveying a fluid for cooling the power and comprising a suction side,
a vessel defining a longitudinal axis and comprising an inlet and an outlet feeding the suction side, and
a piping feeding both the inlet and the suction side of the at least one pump, whereby
the vessel comprises a T-shaped pipe arranged within the vessel, the T-shaped pipe is fed by the inlet, whereby opposite pipe ends extend along the longitudinal axis and are closed with holed ends for spreading fluid into the vessel.

A key point of the invention is therefore that the vessel respectively the T-shaped pipe arranged within the vessel slows down velocity of the fluid into a velocity below a rising speed of gas bubbles. Such wise the gas bubbles can rise to a top of the vessel, where an automatic deareation valve can be arranged for letting the gas bubbles escape out of the vessel. Thereby, according to the proposed solution, the inlet to the vessel goes into a T-section i.e. the T-shaped pipe where a main part of the fluid is preferably sent downwards and a small portion of the fluid is sent upwards. Both outlets from the T-section i.e. the opposite pipe ends are equipped with holed ends, such as for example holed plates, to spread the fluid flow outwards towards a perimeter of the vessel. The solution can thus enable the vessel to have a high flow and high efficiency due to the fact that a large portion of the flow entering the vessel can bypass a vessels main body.

Experimental tests have shown that with the proposed cooling system, a flow into the vessel is higher than a deareated volume flow, for such wise getting larger bubbles into the vessel. The flow through the vessel is thereby set by the number of holes in the holed ends, and not an external orifice plate as in prior art. The flow before a possible split of the fluid flow prior to entering the vessel can be accelerated i.e. concentrated, and can be divided in two almost equal streams. Further, with the proposed solution, prior art short-circuit problem is removed with the aid of the two holed ends, one at the top and one at the bottom of the T-shaped pipe. Thereby, the top holed end preferably distributes the fluid flow across a section and the lower holed end forces the fluid flow to go towards a perimeter of the vessel, whereby the velocity can be reduced exponentially.

The pump can be provided as any pump known from prior art, for example having an impeller arranged within a pump housing and a motor for rotating the impeller, The fluid can be pure water or glycol-water mixture. The vessel may comprise any suitable shape. Preferably the vessel is provided as a closed cylinder, in particular with rounded edges, having a diameter of for example 500 or 640 mm, as per DN500 or DY640, or others. The piping may comprise a tube and/or a system of tubes and/or may comprise a diameter of 200 or 250 mm as per DN200 or DN250.

The term holed end means that a lateral and/or a base area of the end is provided with a plurality of holes, whereby a respective other part can be closed i.e. provided without holes. Thus, for example an axial end area of the opposite pipe ends can be equipped with holes have an axis orthogonal to the longitudinal axis, while the base area is provided without holes. The term feeding and/or connected shall be preferably understood that respective two parts are fluidly connected, for example by welding, bolts and/or by using a clamp, a clip or the like.

According to a preferred implementation, the holed ends are provided as holed plates covering a respective base area of the opposite pipe ends which closed lateral surfaces or the holed ends are provided as holed lateral surface of the opposite pipe ends with a respectively closed base area of the opposite pipe ends. Said holed base surface advantageously avoids low pressure zones. The holed lateral surface covering the lateral surface preferably extends radially completely around the longitudinal axis and/or reach axially from the respective pipe end towards a middle pipe end, completely or at least for 25%, 50% or 75% of the respective axial extension between the from the respective pipe end towards a middle pipe end. In an alternative implementation both the holed ends are provided as holed plates covering the respective base area of the opposite pipe ends and as holed lateral surface of the opposite pipe ends. The term closed preferably means that no holes are provided within the respective surface.

In another preferred implementation, the holed ends are provided as holed areas covering a respective base area of the opposite pipe ends and an upper holed plate and/or a lower holed plate of the holed plates faces away from and/or towards the at least one pump and/or comprises the same diameter of the respective pipe end. Preferably, the holed areas cover the complete base area of each pipe end.

According to a further preferred implementation, in particular the vessel comprises a disc-like perforated bypass plate radially surrounding a lower pipe end facing towards the at least one pump and preferably arranged radially distant to an interior wall of the vessel. Such disc-like perforated bypass plate advantageously hinders a short circuit of the fluid flow. The disc-like perforated bypass plate may extend around half the distance between the lower pipe end and an inner interior wall of the vessel. The disc-like perforated bypass plate preferably comprises a plurality of holes, which may be arranged in equal distances.

In another preferred implementation, in particular the vessel comprises a disc-like perforated distribution plate radially surrounding an upper pipe end facing away from the at least one pump, arranged axially distant to the upper pipe end and/or radially touching an interior wall of the vessel. Said disc-like perforated distribution plate advantageously distributes the fluid flow in axial direction. Such wise the disc-like perforated distribution plate may reduce pressure differences in a top section of the vessel, which in particular is a section that deareates really fine fluid particles. Further, the disc-like perforated distribution plate may give a good channel for entrapped gas to rise to a top of the vessel and/or for equalising gas. The disc-like perforated distribution plate preferably comprises a plurality of holes, which may be arranged in equal distances. The disc-like perforated distribution plate may in axial direction arranged between the upper pipe and the middle pipe end.

According to a further preferred implementation, the perforated distribution plate comprises a higher perforation, a higher porosity and/or higher amount of holes than the holed ends. Preferably the holed lateral surface comprises a higher perforation, a higher porosity and/or higher amount of holes than the holed plates covering the respective base areas. The holes in the holed ends, in the disc-like perforated distribution plate, and/or disc-like perforated bypass plate preferably comprise a diameter of 1, 2, 3, 4 or 5 mm, comprise all the same diameter and/or are space away from each other in in particular regular distances by 2, 3, 4, 5, 6, 7, 8, 9 or 10 mm. The disc-like perforated distribution plate and/or disc-like perforated bypass plate preferably comprise a washer-like shape and/or are provided as metal, for example comprise aluminium.

In another preferred implementation a lower pipe end facing towards the at least one pump is closer to a lower longitudinal end of the vessel than an upper pipe end facing away from the at least one pump and/or the inlet enters the vessel at a lower half of the longitudinal axis facing towards the at least one pump. In our words, the T-shaped pipe is preferably arranged in the lower part of the vessel, in particular in a lower half or in a lower two third of the vessel facing the outlet.

According to a further preferred implementation, the cooling system comprises a second T-shaped pipe having a same diameter on all three second pipe ends and arranged with the opposite second ends between the inlet and the at least one pump for feeding the suction side. The second T-shaped pipe is preferably arranged in respect to the two opposite second ends orthogonal to the longitudinal axis. By means of such second T-shaped pipe the fluid flow can be split, for example, in two equal parts regardless of a fluid flow speed.

In another preferred implementation, the second pipe end feeding the suction side has a smaller or larger diameter, in particular at least 50% smaller or lager diameter than the outlet feeding the suction side. Alternatively, the second pipe end feeding the suction side has a 10, 25, 40, 60 or 75% smaller or larger diameter. If in particular, the diameter of the second pipe end feeding the suction side is 50% smaller than the outlet feeding the suction side, an equal distribution of the fluid flow through the vessel and the second pipe and can be ensured.

According to a further preferred implementation, the outlet extends along the longitudinal axis and is arranged at a longitudinal end of the vessel, and/or the inlet extends orthogonal to the longitudinal axis and is arranged on a lateral surface of the vessel. Preferably, the outlet ends at an interior wall of the vessel and/or is provided as a tube-like piece and/or integrally connected to a respective opening of the vessel. Such wise a surface of the outlet defining the diameter of the outlet extends preferably orthogonal to the longitudinal axis. Further preferably, the inlet is provided as a tube-like piece which extends orthogonal to the longitudinal axis through a respective opening provided on the lateral surface into the vessel. Such wise a surface of the inlet defining the diameter of the inlet extends preferably parallel to the longitudinal axis. The T-shaped pipe is preferably arranged within the vessel in respect to the two opposite pipe ends aligned with the longitudinal axis.

In another preferred implementation, the cooling system comprises two pumps equally fed by the piping and the vessel. The two pumps are preferably arranged in parallel and/or the piping comprise a U-shaped form, the ends of which are connected to the respective suction sides of the pumps. Preferably the outlet and the second pipe end feeding the suction side are connected at equal distances to the respective pumps to the piping.

According to a further preferred implementation, the vessel comprises a valve arranged at a longitudinal end of the vessel facing away from the at least one pump. The valve is preferably provided as an automatic deareation valve such that gas bubbles can escape from the vessel.

In another preferred implementation, the cooling system a high-voltage direct current, HVDC, and/or a static var compensator, SVC, as power transmission application is cooled by the fluid. Such HVDC application may include transformers, circuit breakers, voltage source converters or other respective applications known from prior art. HVDC application may use voltages between 100 kV and 800 kV, with up to 1,100 kV and/or a power capacity of 12 GW. A static VAR compensator is generally understood as set of electrical devices for providing fast-acting reactive power on high-voltage electricity transmission networks. The SVC is often used as an automated impedance matching device, designed to bring a system closer to unity power factor.

### Brief description of drawings

These and other aspects of the invention will be apparent from and elucidated with reference to the implementations described hereinafter.

In the drawings:
Fig. 1 shows a cooling system for a power transmission application according to a preferred implementation in a perspective schematic view,
Fig. 2 shows a vessel and piping of the cooling system of Fig. 1 according to the preferred implementation in a perspective schematic view,
Fig. 3 shows the vessel of Fig. 2 according to the preferred implementation in a perspective schematic view, and
Fig. 4 shows a part of an interior the vessel of Fig. 2 according to another preferred implementation in a perspective schematic view.

### Description of implementations

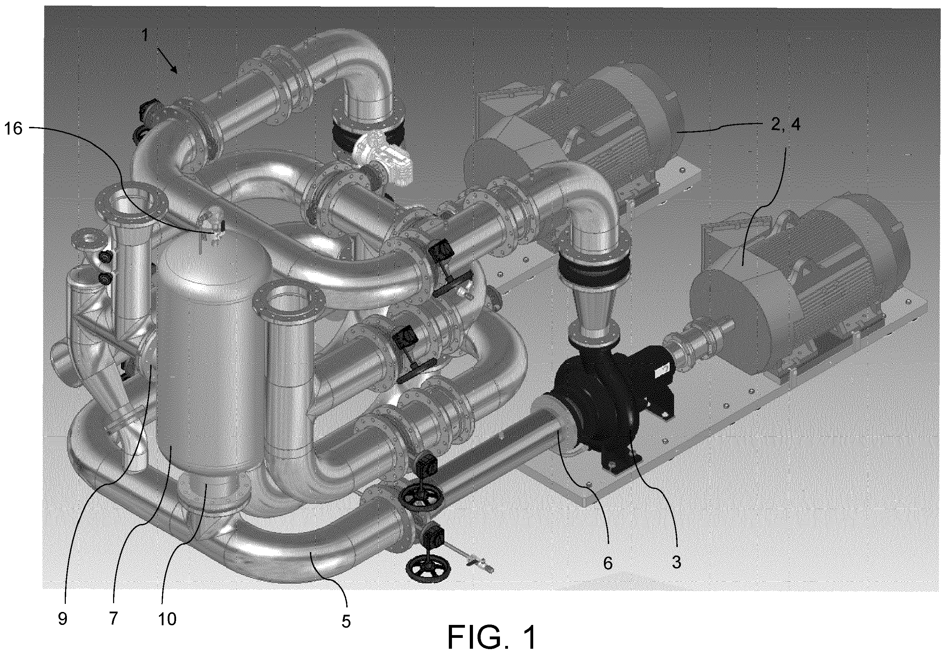

Fig. 1 shows a cooling system 1 for a power transmission application according to a preferred implementation in a perspective schematic view.

The cooling system 1 comprises two pumps 2 arranged in parallel and each having a pump housing 3 and a motor 4 for actuating an impeller arranged within the pump housing 3. In Fig. 1, two motors 4 are shown, while the second pump housing 3 in the back is hidden by a piping 5 fluidly connected to a suction side 6 of both pump housings 3. The piping 5 connecting the suction sides 6 is provided as DN 200 or DN 250 pipes respectively tubes i.e. comprise a diameter of 200 or 250 mm. Said pipes comprise, in top view, a U-formed shape, whereby one end connects to one suction side 6 and another end connects to another suction side 6.

The pumps 2 are intended to convey a fluid, such as pure water or a glycol-water mixture, for cooling the power transmission application, not shown. Such power transmission application can be provided as high-voltage direct current, HVDC, and/or a static var compensator, SVC, power transmission application.

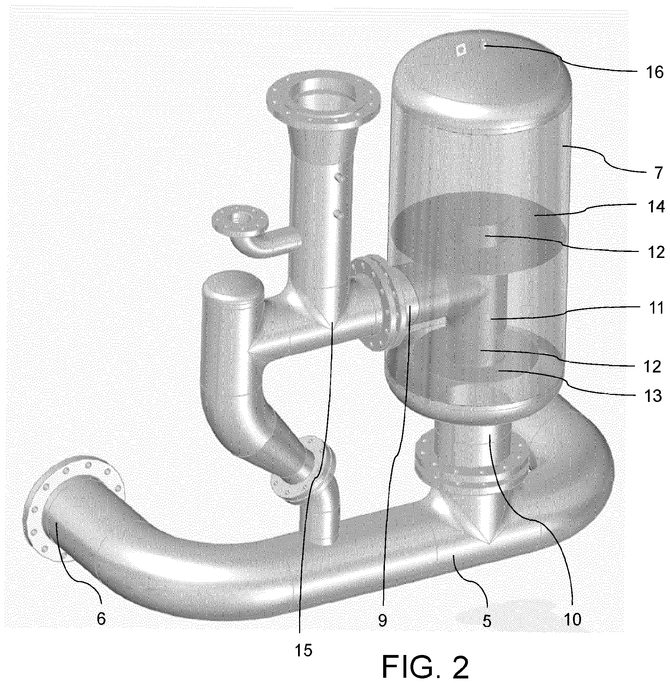

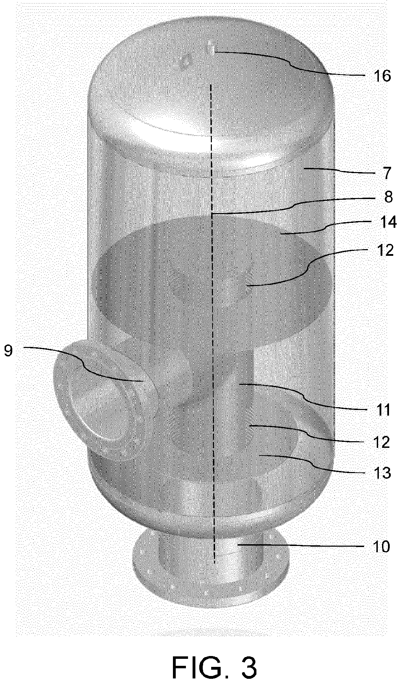

The cooling system 1 further comprises a vessel 7, which can be seen in more detail and partly transparent in Figs. 2 and 3 in a perspective schematic view. The vessel 7 is provided as a cylinder-like DN 500 or DY 640 closed tube i.e. comprises a diameter of 500 or 640 mm with closed and rounded end surface such wise defining a longitudinal axis 8. In respect to Fig. 1, the longitudinal axis 8 extends orthogonal to the U-formed pipes of the piping 5 feeding the suction sides 6 of the pumps 2.

The vessel 7 comprises an inlet 9 and an outlet 10. The outlet 10 extends along the longitudinal axis 8 and is arranged at a lower longitudinal end of the vessel 7 facing the U-formed pipes. The outlet 10 constitutes a tube that ends at an interior side wall of the vessel 7. Said tube of the outlet 10 is connected via a T-piece to the U-formed pipes for thereby feeding the suction sides 6. The inlet 9 extends orthogonally to the longitudinal axis 8 respectively the outlet 10 and is arranged on a lateral surface of the vessel 7. Thereby the inlet 9 constitutes a tube that reaches through the interior side wall of the vessel 7. Both the inlet 9 and the outlet 10 comprises the same diameter as the U-formed pipes.

The inlet 9 is connected to a T-shaped pipe 11 arranged within the vessel 7 such that the inlet 9 does not end at the interior side wall of the vessel 7. The T-shaped pipe 11 comprises two opposite pipe ends, which extend along the longitudinal axis 8. Said opposite pipe ends are closed, however, comprise holed ends 12 for spreading the fluid into an interior of the vessel 7. The so spread fluid exists the vessel 7 via the outlet 10.

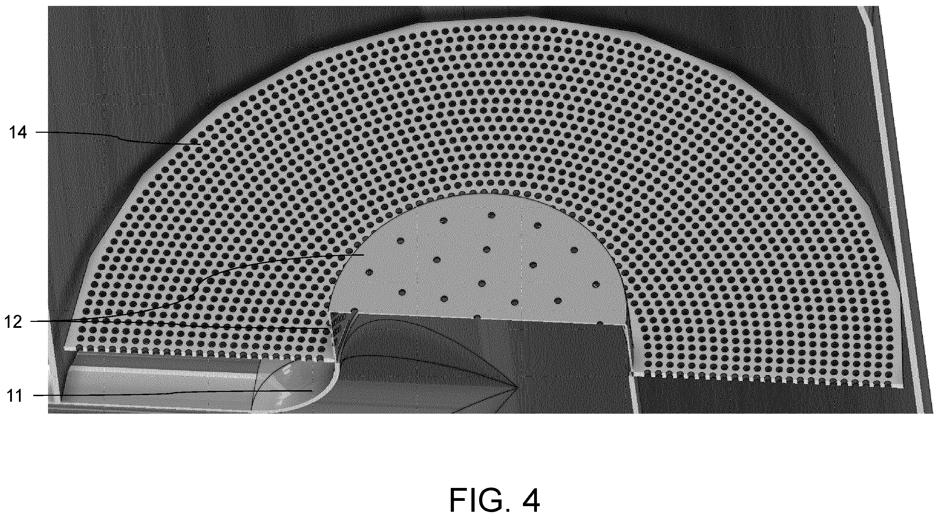

Said holed ends 12 are provided in Figs. 2 and 3 at axially extending respective lateral surfaces of the opposite upper and lower pipe ends, whereby radially extending end surfaces of the T-shaped pipe 11 are closed i.e. provided without holes. In an alternative or additional implementation, as shown in Fig. 4, both the axially extending respective lateral surfaces of the opposite pipe ends and the radially extending end surfaces of the T-shaped pipe 11 are provided with holes, through which the fluid enters the interior of the vessel 7.

The vessel 7 further comprises a disc-like perforated bypass plate 13, which radially surrounds the lower pipe end facing towards the pumps 2 respectively the piping 5. Said disc-like perforated bypass plate 13 is axially arranged at the lower pipe end and is arranged radially distant to the interior side wall of the vessel 7. Thereby the radial extension of the disc-like perforated bypass plate 13 equals the radial distance from the disc-like perforated bypass plate 13 to the interior side wall of the vessel 7. Thus, as can be seen in Figs. 2 and 3, the holed ends 12 are arranged `above' the disc-like perforated bypass plate 13.

The vessel 7 even further comprises a disc-like perforated distribution plate 14, which radially surrounds the upper pipe end facing away from the pumps 2 respectively the piping 5. Said disc-like perforated distribution plate 14 is arranged distant to the upper pipe end and extends radially touching to the interior wall of the vessel 7. As can be seen in Figs. 2 and 3, the holed ends 12 are arranged 'above' the disc-like perforated bypass plate 13.

The cooling system 1 further comprises a second T-shaped pipe 15 having a same diameter on all three second pipe ends. The second T-shaped pipe 15 is arranged with the opposite second ends between the inlet 9 and the pumps 2 respectively the U-formed piping 5, whereby fluid is sucked in by the remaining middle end. Thereby, the second end feeding the piping 5 has a 50% smaller diameter than the inlet 10.

Now turning to Fig. 4, said figure shows a part of an interior the vessel of Fig. 2 according to another preferred implementation in a perspective schematic view. The disc-like perforated distribution plate 14 is equipped with a plurality of pressure naturalizing holes to reduce pressure differences in a top section of the vessel 7, which deareates really fine particles within the fluid. The disc-like perforated distribution plate 14 also gives a good channel for entrapped gas to rise to a top of the vessel 7 for escaping the vessel via a valve 16 arranged at a longitudinal end of the vessel 7 facing away from the pumps 2. As can further be seen from Fig. 4, the holed end 12 is provided with holes both at the lateral side and at the base side, whereby the lateral side as well as the disc-like perforated distribution plate 14 comprises a higher perforation than the base side.

While the invention has been illustrated and described in detail in the drawings and foregoing description, such illustration and description are to be considered illustratively or exemplary and not restrictive; the invention is not limited to the disclosed implementations. Other variations to the disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: cooling system
- 2: pump
- 3: pump housing
- 4: motor
- 5: piping
- 6: suction side
- 7: vessel
- 8: longitudinal axis
- 9: inlet
- 10: outlet
- 11: T-shaped pipe
- 12: holed end
- 13: disc-like perforated bypass plate
- 14: disc-like perforated distribution plate
- 15: second T-shaped pipe
- 16: valve

## Claims

1. Cooling system (1) for a power transmission application comprising
at least one pump (2) configured for conveying a fluid for cooling the power transmission application and comprising a suction side (6),
a vessel (7) defining a longitudinal axis (8) and comprising an inlet (9) and an outlet (10) feeding the suction side (6), and
a piping (5) feeding both the inlet (9) and the suction side (6) of the at least one pump (2), whereby
the vessel (7) comprises a T-shaped pipe (11) arranged within the vessel (7), the T-shaped pipe (11) is fed by the inlet (9), whereby opposite pipe ends extend along the longitudinal axis (8) and are closed with holed ends (12) for spreading fluid into the vessel (7).

2. Cooling system (1) according to the previous claim, whereby the holed ends (12) are provided as holed plates covering a respective base area of the opposite pipe ends which closed lateral surfaces or the holed ends (12) are provided as holed lateral surface of the opposite pipe ends with a respectively closed base area of the opposite pipe ends.

3. Cooling system (1) according to any of the previous claims, whereby the holed ends (12) are provided as holed plates covering a respective base area of the opposite pipe ends and an upper holed plate and/or a lower holed plate of the holed plates faces away from and/or towards the at least one pump (2) and/or comprises the same diameter of the respective pipe end.

4. Cooling system (1) according to any of the previous claims, comprising a disc-like perforated bypass plate (13) radially surrounding a lower pipe end facing towards the at least one pump (2) and preferably arranged radially distant to an interior wall of the vessel (7).

5. Cooling system (1) according to any of the previous claims, comprising a disc-like perforated distribution plate (14) radially surrounding an upper pipe end facing away from the at least one pump (2), arranged axially distant to the upper pipe end and/or radially touching an interior wall of the vessel (7).

6. Cooling system (1) according to the previous claim, whereby the perforated distribution plate (14) comprises a higher perforation than the holed ends (12).

7. Cooling system (1) according to any of the previous claims, whereby a lower pipe end facing towards the at least one pump (2) is closer to a lower longitudinal end of the vessel (7) than an upper pipe end facing away from the at least one pump (2) and/or the inlet (9) enters the vessel (7) at a lower half of the longitudinal axis (8) facing towards the at least one pump (2).

8. Cooling system (1) according to any of the previous claims, comprising a second T-shaped pipe (15) having a same diameter on all three second pipe ends and arranged with the opposite second ends between the inlet (9) and the at least one pump (2) for feeding the suction side (6).

9. Cooling system (1) according to the previous claim, where the second pipe end feeding the suction side (6) has a smaller diameter, in particular a 50% smaller diameter, than the outlet (10) feeding the suction side (6).

10. Cooling system (1) according to any of the previous claims, whereby the outlet (10) extends along the longitudinal axis (8) and is arranged at a longitudinal end of the vessel (7), and/or the inlet (9) extends orthogonal to the longitudinal axis (8) and is arranged on a lateral surface of the vessel (7).

11. Cooling system (1) according to any of the previous claims, comprising two pump (2) equally fed by the piping (5) and the vessel (7).

12. Cooling system (1) according to any of the previous claims, whereby the vessel (7) comprises a valve (16) arranged at a longitudinal end of the vessel (7) facing away from the at least one pump (2).

13. Cooling system (1) according to any of the previous claims, comprising a high-voltage direct current, HVDC, and/or a static var compensator, SVC, as power transmission application cooled by the fluid.
